# EUROPEAN PATENT APPLICATION

(11) **EP 4 015 192 A2**
(43) Date of publication of application: **22.06.2022**
(21) Application number: 21216635.9
(22) Date of filing: 21.12.2021
(51) Int. Cl.: B29C 53/20

(54) **AN APPARATUS AND METHOD FOR REDUCING THE CURVE IN A ROLL OF PIPE**

(30) Priority: 21.12.2020 GB 202020240
(71) Applicant: Turner, Andrew, Darlington DL1 5NQ (GB)
(72) Inventor: Turner, Andrew, Darlington DL1 5NQ (GB)
(74) Representative: Archer, Graham John

(57) **Abstract**

An apparatus for straightening or reducing the curve in a roll of plastic pipe is disclosed. The apparatus has a first line of non-driven rollers arranged in an arc and a second line of non-driven rollers also arranged in an arc with the first and second lines of rollers spaced are apart so that a pipe can snuggly pass between them. Each line includes multiple rollers which are spaced apart in the direction of travel of the pipe and arranged so as not to engage the top of bottom of the pipe as it passes through the apparatus.

## Description

The present invention relates to an apparatus and method for reducing the curve in a roll of pipe and relates particularly, but not exclusively, to an apparatus and method for reducing the curve in a coiled plastic water and gas pipe as it is spooled from a coil of pipe for installation in the ground.

Plastic pipes are commonly used for water and gas distribution and are almost always located underground. It is advantageous to produce and install pipes with as few joins as possible as these joints which are produced outside on the worksite and away from a controlled factory environment are a potential weakness which can result in pipe leakage. Furthermore, the pipe jointing process can considerably slow down the pipe installation process. It is therefore commonplace to install long lengths of plastic pipes which are transported in a coiled or rolled form. Typically, these pipes are around 100m in length and are transported spooled on a trailer with the roll of pipe having an approximately 1-2m radius. A normal method of installation for such pipes is to position a trailer which is designed to transport, secure and dispense coiled pipe approximately a hundred metres from the connection point and to attach the free end of the new pipe to a towing rope. This rope is attached to a winch and the pipe is pulled out of the spool into a trench into which it is to be installed. Because the pipe is coiled into the roll as it is formed from an extruding apparatus, when the pipe is pulled from the spool it has a tendency to want to return to its coiled up state. The elastic energy stored in the coiled pipe becomes a particular problem as the final few metres of the pipe are unrolled from the spool. Incidents of injury have occurred as the end of the pipe on exiting the spool curves back towards its original coiled state. Due to the thickness and relative rigidity of these, typically polyethylene, pipes the end of the pipe can cause injury or damage and is particularly dangerous where pipe installation is being undertaken adjacent to a road.

Attempts have been made previously to overcome the above described problem and examples of such devices are disclosed in earlier patent applications including US3237438 and US5676009. Typically, these devices use hydraulically movable rollers positions along a straight parallel plane, to apply pressure to the pipe as it unrolls so as to straighten it. However, such apparatus is complex, expensive and difficult to use making it inappropriate for many pipe installation situations. Other examples of the prior art are disclosed in CN202462886U, US4810132, US9862015, US3855835, CN112275843A, WO17147656, GB1312592, US4243345, and JP2550090B.

Preferred embodiments of the present invention seek to overcome or alleviate the above described disadvantages of the prior art.

According to an aspect of the present invention there is provided an apparatus for reducing the curve in a roll of pipe, the apparatus comprising:
a first line of rollers arranged in an arc; and
a second line of rollers arranged in an arc, the first and second lines of rollers spaced apart so that a pipe can pass between them and each of the lines of rollers comprising a plurality of rollers spaced apart in the direction of travel of the pipe.

By providing multiple rollers in upper and lower arced line of rollers the advantage is provided as a pipe passes between the two lines of rollers a reverse bend can be easily applied to the pipe in order to reduce the curve and somewhat straighten the pipe. This is achieved with simple apparatus which does not need to include complex hydraulics to apply pressure between different rollers and does not need to include driving rollers. As a result, this apparatus can be simply positioned against or attached to the trailer, either as part of a retrofit or new construction, and allows pipes to be extracted from the spool in a way which is familiar to persons skilled in the art and simple to operate without the need for complex additional apparatus, training or regular maintenance. It is therefore possible to safely spool a pipe from a rolled condition without risk that the end of the pipe will suddenly recoil towards a rolled up condition as it leaves the apparatus. Furthermore, the arrangement of rollers described above reduces the deformation of the pipe which is necessary in order to reduce the curve. In many examples of the prior art significant pressure is applied at a few points and the cross section of the pipe become significantly deformed, that is it forms an oval instead of circle, and this deformation of the pipe shape must be rectified before the pipe can be used and jointed. This is not the case with the present invention which in comparison, gently bends the pipe to reduce the curve of the rolling.

In a preferred embodiment in use the rollers do not contact a portion of the cross section of the pipe closest to the axis of the roll of pipe.

In another preferred embodiment in use the rollers do not contact and uppermost and lowermost portion of the pipe as it passes through the apparatus.

In a further preferred embodiment in use the rollers do not contact the pipe at the points of maximum and minimum stretching of the pipe as it unrolls.

By not contacting the pipe at the top (the part of the pipe which is closest to the axis of the roll of the pipe) the advantage is provided that no contact is being made at the point where the maximum stretch is applied to the pipe.

In a preferred embodiment the rollers in each line comprise a pair of rollers arranged with their axes substantially perpendicular to each other.

In a preferred embodiment the rollers have a substantially V-shaped cross-section.

By having pairs of rollers that are substantially perpendicular to each other or by using V-shaped rollers the advantage is provided that the uppermost and lowermost surfaces of the roll of pipe are not contacted as they pass through the apparatus as these are the parts of the pipe which must undergo the most deformation in order to reduce the curve which is built into the pipe during it formation.

In another preferred embodiment the V-shaped rollers rotate about a substantially horizontal axis.

In a further preferred embodiment the spacing between said first line of rollers and said second line of rollers is fixed for a given pipe diameter.

In a preferred embodiment the spacing between adjacent rollers in said first line is fixed and the spacing between adjacent rollers in said second line is fixed.

In another preferred embodiment the curve of the arc of the rollers in each line is fixed.

In a further preferred embodiment the rollers are non-driven.

In a preferred embodiment in use the pipe engages a plurality of rollers in each of said first and second lines of rollers.

In a preferred embodiment the arc of said first and second lines of rollers comprises 20° to 50° and is most preferably substantially 30°.

According to another aspect of the present invention there is provided an apparatus for dispensing a roll of pipe, the apparatus comprising:
a roll of pipe holding device; and
an apparatus for reducing the curve in a roll of pipe as set out above.

In a preferred embodiment the arc is a part circle having a radius of between 1 and 2 times the radius of the roll of pipe which the pipe holding device is designed to contain.

In another preferred embodiment the arc is a part circle having a radius of substantially 1.5 times the radius of the roll of pipe which the pipe holding device is designed to contain.

The apparatus may further comprise a trailer having said roll of pipe holding device mounted thereon.

According to a further aspect of the present invention there is provided a method of reducing the curve in a roll of pipe, comprising the steps:
locating an end of a pipe, which is formed into a roll, between the rollers of an apparatus as set out above; and
connecting said end of said pipe to a pulling device and pulling the pipe through the apparatus.

Preferred embodiments of the present invention will now be described, by way of example only, and not in any limitative sense with reference to the accompanying drawings in which:-
Figure 1 is an isometric view of an apparatus of the present invention;
Figure 2a is a side view of the apparatus of figure 1 and figure 2b is the same view reduced in size and annotated;
Figure 3 is an end view of the apparatus of figure 1;
Figure 4 is an isometric view of an apparatus for dispensing pipe including the apparatus of figure 1;
Figure 5 is a series of schematic representations (labelled 5a to 5f) of alternative embodiments of the apparatus of figure 1; and
Figure 6 is series of schematic representations (labelled 6a to 6d) of roller arrangements which are not covered by the scope of the claims.

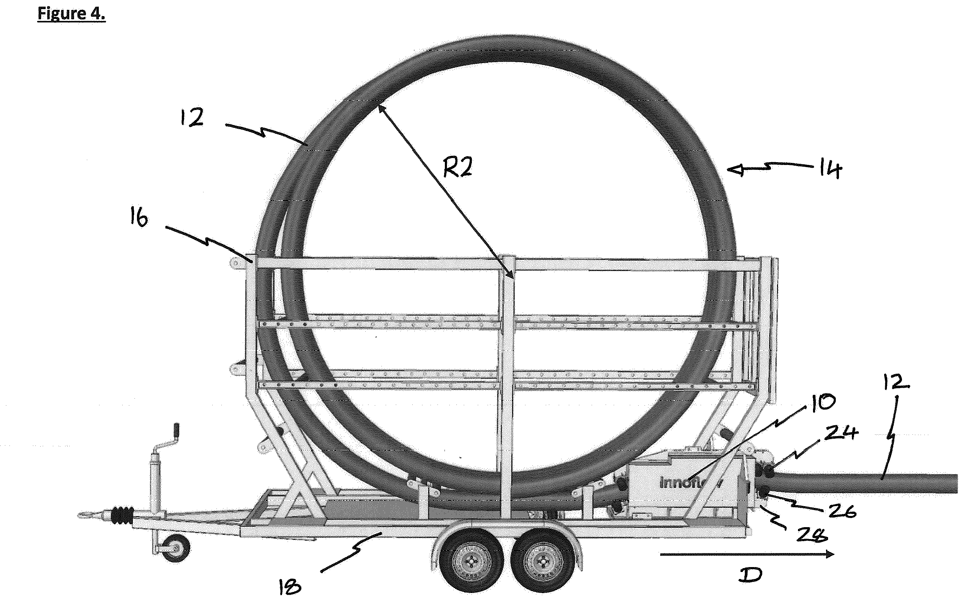

Referring initially to figure 4, an apparatus 10 is provided to reduce the curve on a roll of pipe 12 as it is dispensed from a roll or spool 14 of the pipe 12. The pipes in question are for use most typically as underground clean water (coloured blue) and gas (yellow) carrying pipes, are formed from polyethylene and have a diameter of between 50mm and 200mm. However, the apparatus of the present invention is applicable for use with other similar pipes. The spool 14 is contained in a roll of pipe holding device in the form of a spool holder 16 which is mounted on a trailer 18.

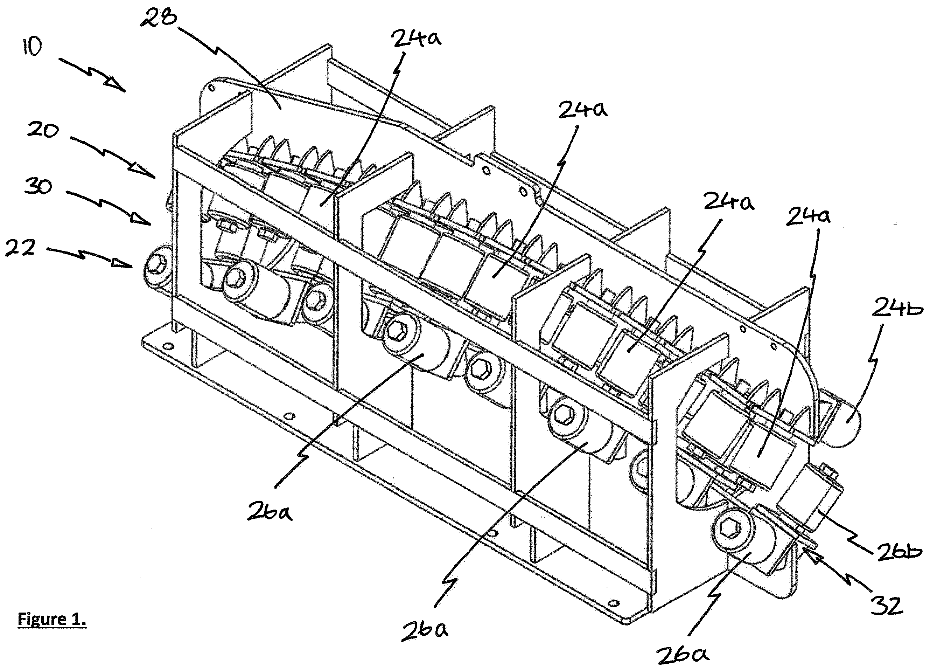

With additional reference to figures 1 to 3, the apparatus 10 utilises a pair of lines of rollers which are arranged in an arc-shaped configuration. There is a first or upper line 20 and a second or lower line 22. The upper line of rollers 20 contains a plurality of upper rollers 24 which are arranged in pairs labelled 24a and 24b. In the embodiment shown in figures 1 to 3, there are fourteen pairs of rollers 24a and 24b which together form that upper arc of rollers 20. Similarly, the lower line of rollers 22 contains a plurality of lower rollers 26 which are arranged in pairs labelled 26a and 26b. However, only eight pairs of rollers are used to form the lower arc 22. The rollers 24a, 24b, 26a and 26b are mounted on a rigid frame 28.

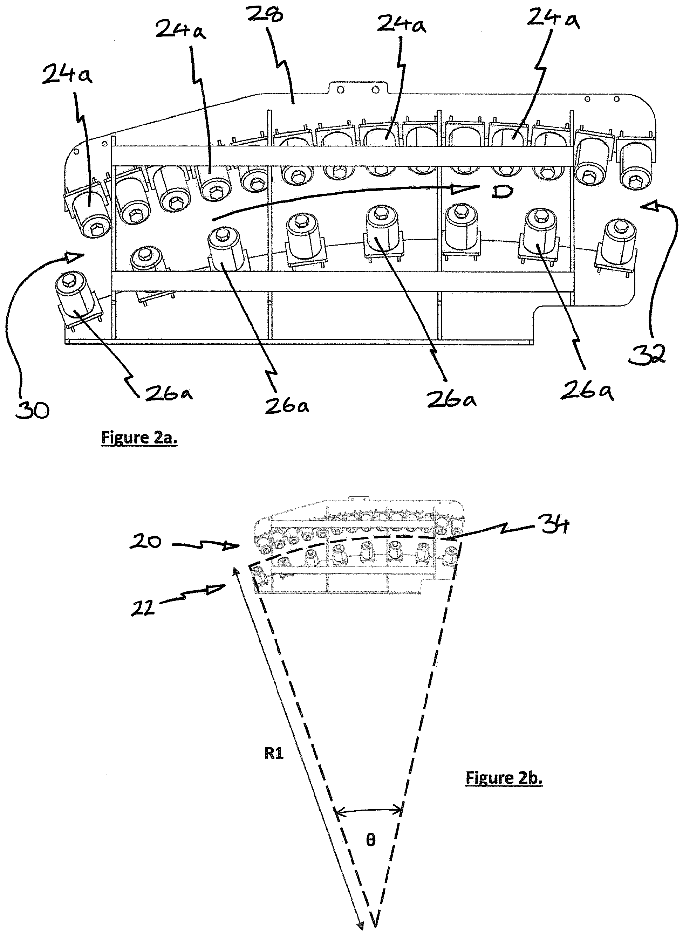

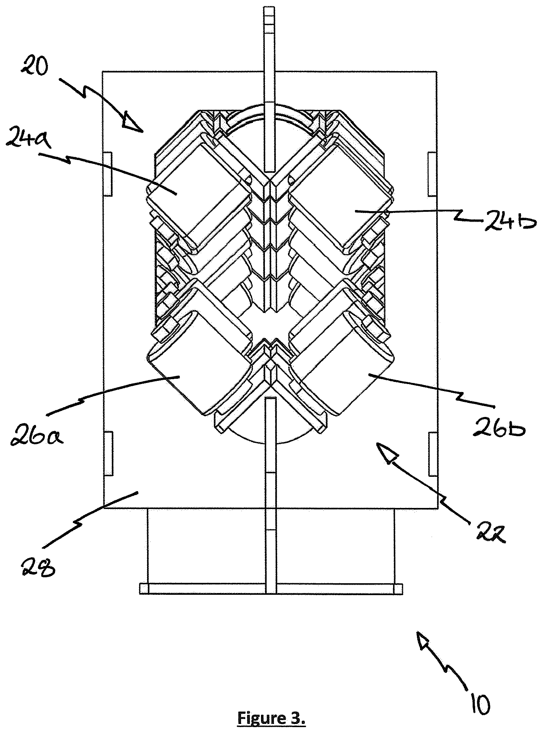

When the apparatus 10 is in use there is an entry end 30 and an exit end 32. In figures 1 and 2 the entry end 30 is at the left-hand end of the image and the exit end 32 is at the right-hand end of the image. Figure 3 is viewed from the exit end 32 and references to left and right are made as viewed towards the exit end 32 as shown in figure 3. As is particularly noticeable from figure 2a, the entry end 30 is located lower than the exit end 32 when the frame 28 is mounted horizontally as shown in that figure. However, it should be noted that this configuration is preferable and not essential.

Because the rollers 24a, 24b, 26a and 26b are mounted on a rigid frame 28 the positions of the rollers relative to one another is fixed. As a result, the spacing between each of the rollers on each side of the upper line of rollers 20 is fixed. In other words, the positions of each of the rollers 24a, that is the rollers in the left-hand half of the upper line of rollers 20, is fixed with respect to the adjacent roller 24a in the left-hand half of the upper line. Similarly, the positions of each of the rollers 24b, that is the rollers on the right-hand half of the upper line of rollers 20, is fixed with respect to the adjacent roller 24b in the right-hand half of the upper line. The situation is the same with the lower line of rollers 22. The position of each of the left-hand lower rollers 26a is fixed with respect to the adjacent roller 26a in the left-hand half of the lower line and the position of each of the right-hand rollers 26b is fixed with respect to the adjacent roller 26b in the right-hand half of the lower line. The pairs of upper rollers 24a and 24b and the pairs of lower rollers 26a and 26b position and fixed such that their axes of rotation are substantially perpendicular to each other. As a result, each pair of rollers is arranged and fixed in a V-shape. The separation between the upper line of rollers 20 and the lower line of rollers 22 is also fixed.

Furthermore, the separation between the upper and lower lines 20 and 22 of rollers is fixed for a given pipe size. In order to facilitate the most effective use of the apparatus 10, the distance between diagonally opposing pairs of rollers is fixed at or close to the external diameter of the pipe but is to pass between them. In other words, the distance between the upper left roller 24a and the lower right roller 26b is the external diameter of the pipe and the axes of these opposing pairs of rollers are approximately parallel to each other. The same is true of the upper right roller 24b and the lower left roller 26a. As a result, the pipe fits snuggly between the opposing pairs of rollers. This snug fit is preferable but not essential to reduction of the curve in the pipe.

With particular reference to figure 2b, the shape of the arc which forms the first and second lines of rollers 20 and 22 will be explained in more detail. As previously described, the upper and lower lines of rollers are formed in an arc shape which is indicated in figure 2B with reference 34. The arc 34 of the upper and lower lines 20 and 22 is a part of a circle which has a radius R1 which is ideally related to the radius R2 of the spool 14 of the pipe 12. In the example shown the radius R1 is approximately 1.5 times the radius R2. However, the apparatus also works where R1 is in the range of 1 to 2 times the radius R2. The angle θ of the arc, that is the angle as measured from the first to the last roller is ideally 30°. However, the apparatus also works where the angle θ of the arc is between 20° and 50°.

Operation of the apparatus 10 will now be described. As can be seen in figure 4, the apparatus for dispensing a pipe 12 from a spool 14 includes the apparatus for reducing the curve in the roll of pipe 12, the spool holder 16 and the trailer 18. It is important to note that the purpose of the apparatus of the present invention is not necessarily to produce a perfectly linear (straight) pipe from the spool but instead to reduce the curve on the pipe as it is unrolled from the spool holder in order to ensure that it is easily and safely handled in particular as the end of the pipe is reached. It is of course acceptable for the pipe to be straight but it is not essential that a completely linear pipe exits the spool holder in order to ensure that it is safe.

The end of the pipe 12 is fed into the entry end 30 of the apparatus 10 and feeds through the pair of lines 20 and 22 of rollers 24 and 26 and exits the apparatus through the exit end 32. This feeding of the pipe 12 through the apparatus 10 is achieved by attaching a rope (not shown) via a connector (also not shown) to the end of the pipe. These connectors are familiar to persons skilled in the art and do not form part of the present invention. The connector is attached to a rope and this rope is pulled by any suitable means which includes, but is not limited to, a winch, or by towing via a vehicle such as a tractor. Because the pipe is pulled through the apparatus 10, the apparatus does not need any driving wheels to operate and no power supply is required. Pulling the pipe 12 through the apparatus 10 forces the pipe to follow the shape of the arc of the space between the upper and lower lines of rollers 20 and 22 in the direction D. This arc shape is arranged so that the curve of the arc is in the opposite direction to the curve of the spooled pipe. As a result, the pipe 12 is forced to bend in the opposite direction and this action reduces the curve in the pipe. Because the pipe is supported, by the rollers 24 and 26, at multiple points along the length of the two lines of arc of rollers the force applied to any one point on the pipe at any given moment is not very high and as a result the pipe does not deform away from a circular cross-section as it passes through and exits the apparatus 10.

Because the lines of rollers are arranged as pairs of rollers (upper pairs 24a and 24b) and lower pairs 26a and 26b) the pairs of rollers appear arranged in a diamond-like configuration or more accurately a square sitting on one corner. In other words, the axes of rotation of the rollers together form a square or diamond shape. As a result, the points of contact between the rollers and the pipe as it passes through the apparatus 10 are arranged at diagonal corners. That is, when looking at a cross section of the pipe 12 exiting the apparatus as viewed in figure 3, if 0° is at the top of the pipe the points of contact are at 45°, 135°, 225° and 315°. Therefore, there is no contact between the rollers at the top and the bottom of the pipe which is where the most stretching and compressing deformation of the pipe is taking place as it passes through the apparatus 10. In other words, the rollers do not contact the external surface of the pipe at the point closest to the axis of the role of pipe, that is at the top or the point furthest away from the axis of the role of pipe, that is at the bottom.

As previously mentioned, the upper line 20 contains more rollers than the lower line 22. As a result, the spacing of the rollers in the upper line 20 is much smaller than in the lower line 22. This arrangement is to assist with the easy entry of the pipe 12 into the apparatus 10. As the pipe 12 enters the entry end 30 it engages the first of the upper and lower rollers 24a, 24b, 26a and 26b. As the end of the pipe passes along the space between the upper and lower lines of rollers it tends to press against line 20 and therefore having the upper rollers 20 force based close together ensures that the pipe end does not snag on or jam between any of the rollers. Once the pipe 12 is fully entered the apparatus the pipe engages a plurality of, but not necessarily all of, the rollers in each of the lines.

As previously mentioned, the purpose of the apparatus is to reduce the elastic energy in the pipe as it exits the apparatus and will therefore not recoil risking injury to nearby personnel or damage to objects. Because the purpose of the apparatus 10 is to reduce the curve of a roll of pipe, the pipe once it is passed through the apparatus if left would begin to return to a somewhat rolled up condition.

It will be appreciated by persons skilled in the art that the above embodiments have been described by way of example only and not in any limitative sense, and that various alterations and modifications are possible without departure from the scope of the protection which is defined by the appended claims. For example, the pairs of rollers in each of upper and lower lines can be replaced with a single roller which has a horizontal axis and has a V-shaped cross-section, also described as being hourglass shaped or as V-rollers. Like the pairs of rollers arranged at 90° to each other, these V-rollers ensure that the uppermost and lowermost points of the pipe are not contacted as the pipe passes through the apparatus 10.

In the above embodiment the apparatus has been described with all the rollers fixed in position. This allows a simple strong and robust apparatus to be provided and this apparatus is able to operate using a range of different pipe diameters. However, the range of diameters is not all possible diameters and it is therefore advantageous to have the first line of rollers movable relative to the second line of rollers so as to vary the space between the two arcs. For example, the frame 28 may be formed into portions one carrying the upper set of rollers 20 and the other carrying the lower set of rollers 22. The two frame portions are linked by telescopically engaged legs which are locked into a plurality of positions by one or more locking pins for each leg which engage a series of holes formed in the legs. As a typical example, these holes for receiving the locking pins can be separated by 20mm which allows pipes of different diameters to be used through the same device with only a minor set up alteration to the separation between the arcs of rollers. It is typical within a range of pipes for pipe sizes to increase by 20mm and therefore pipes will fit snuggly between the lines of rollers if they are positioned at the correct separation and this results in effective straightening of the pipe. However, any pipes with diameters which fall in between the 20mm ranges will still pass through the apparatus and benefit from straightening as they pass through the apparatus 10, even if this straightening is not as effective as it would be with a snug fit. The frame portion which is carrying the upper arc of rollers 20 preferably has a lifting means for attaching a lifting hook to facilitate easy and safe handling of the two frame portions. This means that it is easy to fix the separation of the lines of rollers during a setup operation prior to the straightening operation of the apparatus 10. Alternative methods of changing the separation between the arcs of rollers can, of course, also be used. For example, the position of the upper or lower line can be moved by manual or electromechanical movement of threaded members onto which the frame portions are mounted. As a further alternative the separation can be controlled hydraulically. It is equally possible that individual pairs of rollers can be moved so as to alter the shape of the arc or the spacing between the rollers in the direction of travel of the pipe.

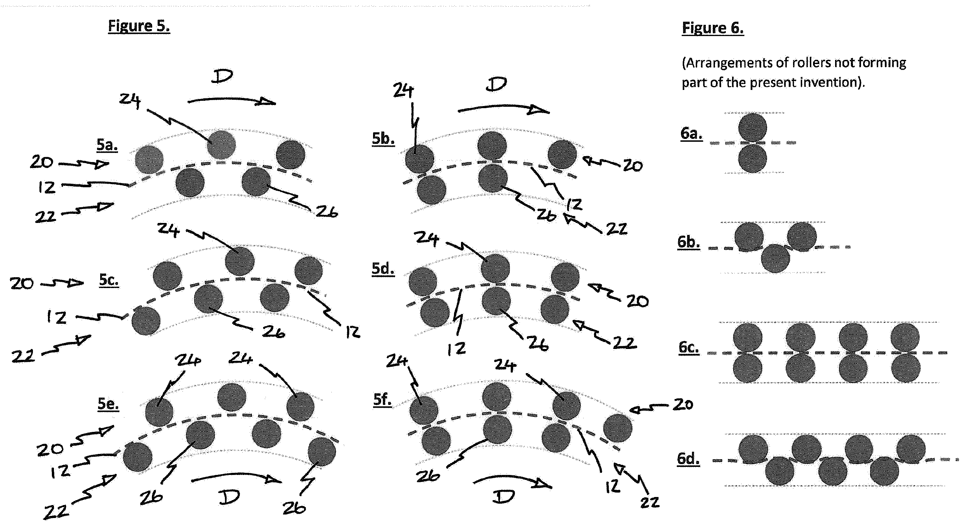

The above embodiments describe the use of a multiplicity of rollers (fourteen pairs of rollers in the upper line and eight pairs of rollers in the lower line). However, although the use of this many rollers is advantageous in producing an apparatus which operates efficiently, it is not essential that so many rollers are used. It is necessary that both the upper and lower arcs 20 and 22 contain a plurality of rollers that are spaced apart in the direction of travel of the pipe. That is there must be at least two pairs of rollers 24 (or two V-shaped rollers) in the upper line of rollers 20 and there must be at least two pairs of rollers 26 (or two V-shaped rollers) in the lower line of rollers 22. With further reference to figure 5, a series of examples of alternative arrangements of rollers is schematically represented. In figure 5a, the upper line of rollers 20 contains three rollers 24 and the lower line of rollers 22 contains two rollers 26. In this arrangement the five sets of rollers are offset relative to one another such that the lower rollers 26 are located between the upper rollers 24. A similar configuration as shown in figure 5b except that two of the upper rollers 24 and two of the lower rollers 26 are aligned with each other and a further upper roller 24 remains on its own. Similar configurations are shown in figures 5c and 5d except that in this instance six sets of rollers are used with three sets of rollers 24 in the upper line 20 and three sets of rollers 26 used in the lower line 22. Further examples, using seven sets of rollers, are shown in figures 5e and 5f. In 5e the rollers in the upper and lower lines are offset relative to one another and the upper line 20 contains three rollers 24 whereas the lower line 22 contains four rollers 26. However, this arrangement is reversed in the aligned example figure 5f where there are four rollers 24 in the upper line 20 and three rollers 26 in the lower line 22. It should be noted that the arrangements of rollers in figure 6 do not form part of the present invention. These suggested arrangements, in common with the invention, have a pair of lines of rollers arranged as upper and lower lines. However, these lines are not arranged in arcs and are instead linear. In order to reduce the curvature of the pipe from a roll of pipe such arrangements require excessive external pressure on the wall to be applied to the pipe in order straighten it which can result in damage to the pipe. Although no driven wheels are required in order to operate the apparatus the inclusion of one or more driven wheels would not detract from the operation of the apparatus.

## Claims

1. An apparatus for reducing the curve in a roll of pipe, the apparatus comprising:
a first line of rollers arranged in an arc; and
a second line of rollers arranged in an arc, the first and second lines of rollers spaced apart so that a pipe can pass between them and each of the lines of rollers comprising a plurality of rollers spaced apart in the direction of travel of the pipe.

2. An apparatus according to claim 1, further comprising one or more of the following features:
a) wherein in use the rollers do not contact a portion of the cross section of the pipe closest to the axis of the roll of pipe;
b) wherein in use the rollers do not contact the uppermost and lowermost portion of the pipe as it passes through the apparatus; and
c) wherein in use the rollers do not contact the pipe at the points of maximum and minimum stretching of the pipe as it unrolls.

3. An apparatus according to claim 1, wherein the rollers in each line comprise a pair of rollers arranged with their axes substantially perpendicular to each other.

4. An apparatus according to any of claims 1 to 3, wherein the rollers have a substantially V-shaped cross-section.

5. An apparatus according to claim 4, wherein said V-shaped rollers rotate about a substantially horizontal axis.

6. An apparatus according to any preceding claim, wherein the spacing between said first line of rollers and said second line of rollers is fixed.

7. An apparatus according to any preceding claim, wherein the spacing between adjacent rollers in said first line is fixed and the spacing between adjacent rollers in said second line is fixed.

8. An apparatus according to any preceding claim, wherein the curve of the arc of the rollers in each line is fixed.

9. An apparatus according to any preceding claim, wherein said rollers are non-driven.

10. An apparatus according to any preceding claim, wherein in use the pipe engages a plurality of rollers in each of said first and second lines of rollers.

11. An apparatus according to any preceding claim, wherein said arc of said first and second lines of rollers comprises 20° to 50° and most preferably said arc of said first and second lines of rollers comprises substantially 30°.

12. An apparatus for dispensing a roll of pipe, the apparatus comprising:
a roll of pipe holding device; and
an apparatus for reducing the curve in a roll of pipe according to any of the preceding claims.

13. An apparatus according to claim 11, wherein said arc is a part circle having a radius of between 1 and 2 times the radius of the roll of pipe which the pipe holding device is designed to contain and is most preferably substantially 1.5 times the radius of the roll of pipe which the pipe holding device is designed to contain.

14. An apparatus according to claim 12 or 13, further comprising a trailer having said roll of pipe holding device mounted thereon.

15. A method of reducing the curve in a roll of pipe, comprising the steps:
locating an end of a pipe, which is formed into a roll, between the rollers of an apparatus according to any of the preceding claims; and
connecting said end of said pipe to a pulling device and pulling the pipe through the apparatus.
